# EUROPEAN PATENT SPECIFICATION

(11) **EP 4 169 808 B1**
(45) Date of publication and mention of the grant of the patent: **22.07.2026**
(21) Application number: 22194894.6
(22) Date of filing: 09.09.2022
(51) Int. Cl.: B62D 15/02, G08G 1/14, G08G 1/16

(54) **AUTOMATED VALET PARKING SYSTEM, CONTROL METHOD FOR AUTOMATED VALET PARKING SYSTEM, AND NON-TRANSITORY STORAGE MEDIUM**
AUTOMATISIERTES VALET-PARKSYSTEM, STEUERUNGSVERFAHREN FÜR AUTOMATISIERTES VALET-PARKSYSTEM UND NICHTTRANSITORISCHES SPEICHERMEDIUM
SYSTÈME DE STATIONNEMENT DE VALET AUTOMATISÉ, PROCÉDÉ DE COMMANDE POUR SYSTÈME DE STATIONNEMENT DE VALET AUTOMATISÉ, ET SUPPORT DE STOCKAGE NON TRANSITOIRE

(30) Priority: 21.10.2021 JP 2021172164
(43) Date of publication of application: 26.04.2023
(73) Proprietor: TOYOTA JIDOSHA KABUSHIKI KAISHA, Toyota-shi, Aichi-ken, 471-8571 (JP)
(72) Inventor: SUGANO, Tatsuya, Toyota-shi, 471-8571 (JP); MARUIWA, Nobutsugu, Toyota-shi, 471-8571 (JP)
(74) Representative: J A Kemp LLP

(56) References cited:
- US-A1- 2012 188 100
- US-A1- 2015 039 173
- US-A1- 2021 295 698

## Description

### BACKGROUND OF THE INVENTION

### 1. Field of the Invention

The present invention relates to an automated valet parking system, a control method for the automated valet parking system, and a non-transitory storage medium.

### 2. Description of Related Art

Hitherto, Japanese Unexamined Patent Application Publication No. 2020-079079 (JP 2020-079079 A) is known as a technical document relating to an automated valet parking system. This publication describes a method for automated valet parking in which a parking place control server (infrastructure) causes a vehicle to perform autonomous parking.

US 2012/188100 discloses a prior art terminal, apparatus and method for providing customized auto-valet parking service US 2012/188100 A1 discloses in particular an automated valet parking system configured to perform automated valet parking for automatically parking autonomous driving vehicles in target parking spaces set among a plurality of parking spaces in a parking place, the automated valet parking system comprising:
a vehicle information acquirer configured to acquire vehicle information including position information of the autonomous driving vehicles in the parking place and entry and exit information of the autonomous driving vehicles;
an attention target space setter configured to set, based on an exit target space where an exit vehicle that is an autonomous driving vehicle serving as an exit target in the automated valet parking is parked and parking place map information including exit position information of the parking place, attention target spaces that are the parking spaces that affect exit of the exit vehicle when any other vehicle is entering or exiting the attention target spaces among the parking spaces around the exit target space;
an attention target vehicle determiner configured to determine whether attention target vehicles that are the autonomous driving vehicles entering or exiting the attention target spaces are present based on the attention target spaces, the parking place map information, and the vehicle information;
a completion determiner configured to, when the attention target vehicle determiner determines that the attention target vehicles are present,
determine whether all the attention target vehicles have completed entry or exit from the parking spaces based on the parking place map information and the vehicle information; and
a vehicle instructor configured to determine that the attention target vehicles are present.

### SUMMARY OF THE INVENTION

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

In automated valet parking for a plurality of vehicles, contact between the vehicles may be avoided in such a manner that new entry and exit are not started until entry and exit are completed for all the vehicles around a target parking space that is a parking target for an entry vehicle and an exit target space where an exit vehicle is parked. When the new entry and exit are not started until the entry and exit of all the vehicles are completed, a problem may arise because the efficiency of use of the parking place of the automated valet parking decreases.

An automated valet parking system according to the present invention is defined in the claims.

According to such a configuration, the attention target spaces that affect the exit of the exit vehicle when any other vehicle is entering or exiting the attention target spaces are set among the parking spaces around the exit target space. When the attention target vehicles entering or exiting the attention target spaces are present, the exit start instruction is given to the exit vehicle after determination is made that the attention target vehicles have completed the entry or the exit from the parking spaces. Therefore, it is possible to improve the efficiency of use of the parking place of the automated valet parking as compared with a case where the exit start instruction is not given until the entry and exit are completed for all the vehicles around the exit target space.

The automated valet parking system further includes a route setter configured to set an exit route for the exit vehicle toward an exit of the parking place based on the exit target space and the parking place map information. The attention target space setter is configured to set the attention target spaces based on the exit route and the parking place map information.
According to such a configuration, the attention target spaces are set in consideration of the exit route of the exit vehicle. Therefore, the attention target spaces can be set not to include parking spaces where the entry or exit of other vehicles does not interfere with the exit route. Thus, it is possible to set appropriate attention target spaces.

In the automated valet parking system, the attention target space setter is configured to set a parking space located in a direction along the exit route as the attention target space among the parking spaces adjacent to the exit target space in contact with a traveling path in the parking place, and not to set a parking space that is not located in the direction along the exit route as an attention target space.
According to such a configuration, the parking space that is not located in the direction along the exit route and is presumed to have a small effect on the exit route is not set as the attention target space among the parking spaces adjacent to the exit target space in contact with the traveling path in the parking place. Therefore, it is not necessary to wait for the completion of entry or exit of another vehicle related to the parking space having a small effect. Thus, it is possible to improve the efficiency of use of the parking place.

In the automated valet parking system, the attention target vehicles include a move-aside vehicle that is an autonomous driving vehicle temporarily moving aside into an attention target space or temporarily moving aside into a traveling path in the parking place from the attention target space.
According to such a configuration, the attention target vehicles include the move-aside vehicle. Therefore, it is possible to reduce the occurrence of a case where the move-aside vehicle related to the attention target spaces affects the exit of the exit vehicle.

In the automated valet parking system, the attention target vehicles do not include a move-aside vehicle that is located on the exit route of the exit vehicle and moves aside from the exit route.
According to such a configuration, the move-aside vehicle that moves aside from the exit route has a small possibility of affecting the exit of the exit vehicle. Therefore, it is possible to improve the efficiency of use of the parking place by excluding this move-aside vehicle from the attention target vehicles.

According to such a configuration, the attention target spaces that affect the entry of the entry vehicle when any other vehicle is entering or exiting the attention target spaces are set among the parking spaces around the target parking space. When the attention target vehicles entering or exiting the attention target spaces are present, the entry start instruction is given to the entry vehicle after determination is made that the attention target vehicles have completed the entry or the exit from the parking spaces. Therefore, it is possible to improve the efficiency of use of the parking place of the automated valet parking as compared with a case where the entry start instruction is not given until the entry and exit are completed for all the vehicles around the target parking space.

A control method for an automated valet parking system according to the present invention is defined in the claims.

According to such a configuration, the attention target spaces that affect the exit of the exit vehicle when any other vehicle is entering or exiting the attention target spaces are set among the parking spaces around the exit target space. When the attention target vehicles entering or exiting the attention target spaces are present, the exit start instruction is given to the exit vehicle after determination is made that the attention target vehicles have completed the entry or the exit from the parking spaces. Therefore, it is possible to improve the efficiency of use of the parking place of the automated valet parking as compared with a case where the exit start instruction is not given until the entry and exit are completed for all the vehicles around the exit target space.

A non-transitory storage medium according to the present invention is defined in the claims.

According to such a configuration, the attention target spaces that affect the exit of the exit vehicle when any other vehicle is entering or exiting the attention target spaces are set among the parking spaces around the exit target space. When the attention target vehicles entering or exiting the attention target spaces are present, the exit start instruction is given to the exit vehicle after determination is made that the attention target vehicles have completed the entry or the exit from the parking spaces. Therefore, it is possible to improve the efficiency of use of the parking place of the automated valet parking as compared with a case where the exit start instruction is not given until the entry and exit are completed for all the vehicles around the exit target space.

According to the aspects of the present invention, it is possible to improve the efficiency of use of the parking place of the automated valet parking.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating an automated valet parking system according to a first embodiment;
FIG. 2 is a plan showing an example of a parking place where automated valet parking is performed;
FIG. 3 is a diagram showing an example of a hardware configuration of a parking place control server;
FIG. 4 is a diagram showing an example of a functional configuration of the parking place control server;
FIG. 5 is a diagram illustrating an example of setting of an attention target space for an entry vehicle;
FIG. 6 is a diagram illustrating another example of the setting of the attention target space for the entry vehicle;
FIG. 7 is a diagram illustrating an example of setting of the attention target space for an exit vehicle;
FIG. 8 is a diagram illustrating another example of the setting of the attention target space for the exit vehicle;
FIG. 9 is a diagram illustrating an example of a move-aside vehicle included in attention target vehicles;
FIG. 10 is a diagram illustrating an example of a move-aside vehicle that is not included in the attention target vehicles;
FIG. 11 is a flowchart showing an example of an entry start instruction process;
FIG. 12 is a flowchart showing an example of an exit start instruction process; and
FIG. 13 is a flowchart showing an example of a move-aside vehicle determination process in an attention target vehicle setting step.

### DETAILED DESCRIPTION OF EMBODIMENTS

An embodiment of the present invention will be described below with reference to the drawings.

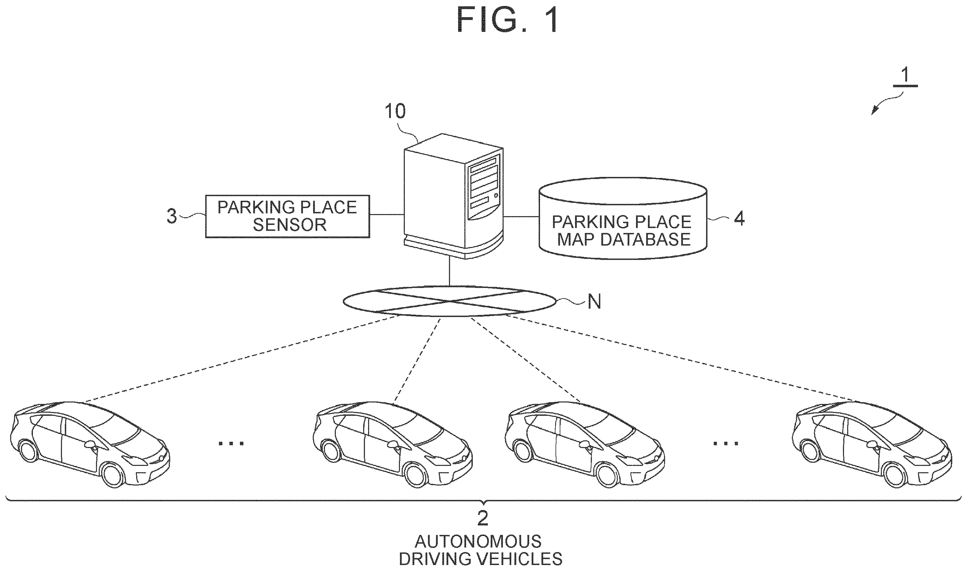

FIG. 1 is a diagram illustrating an automated valet parking system according to one embodiment. An automated valet parking system (AVPS) 1 shown in FIG. 1 performs automated valet parking on a plurality of autonomous driving vehicles 2 in a parking place. Each autonomous driving vehicle 2 has an autonomous driving function capable of executing the automated valet parking in response to an instruction from the automated valet parking system 1. The autonomous driving vehicle 2 may include a transport robot vehicle capable of transporting a vehicle. The transport robot vehicle can achieve the automated valet parking for a vehicle having no autonomous driving function, for example, by lifting or towing a target vehicle for the automated valet parking.

The automated valet parking is a service in which an unmanned autonomous driving vehicle 2 after a user (occupant) has dropped off at a drop-off area in the parking place travels along a target route (for example, an entry route, an exit route, or a move-aside route) in response to an instruction from the parking place side and is automatically parked in a target parking space in the parking place. The target parking space is allocated to each autonomous driving vehicle 2 among parking spaces preset as parking positions of the autonomous driving vehicles 2. The target route is a route in the parking place where the autonomous driving vehicle 2 travels to reach the target parking space. The exit route is a route to be traveled to reach a pick-up space described later.

The parking place may be a parking place dedicated to the automated valet parking, or may be a shared parking place that can be used for communicable vehicles and general vehicles. Parking spaces for the automated valet parking and the other parking spaces may be discriminated from each other and have common traveling paths.

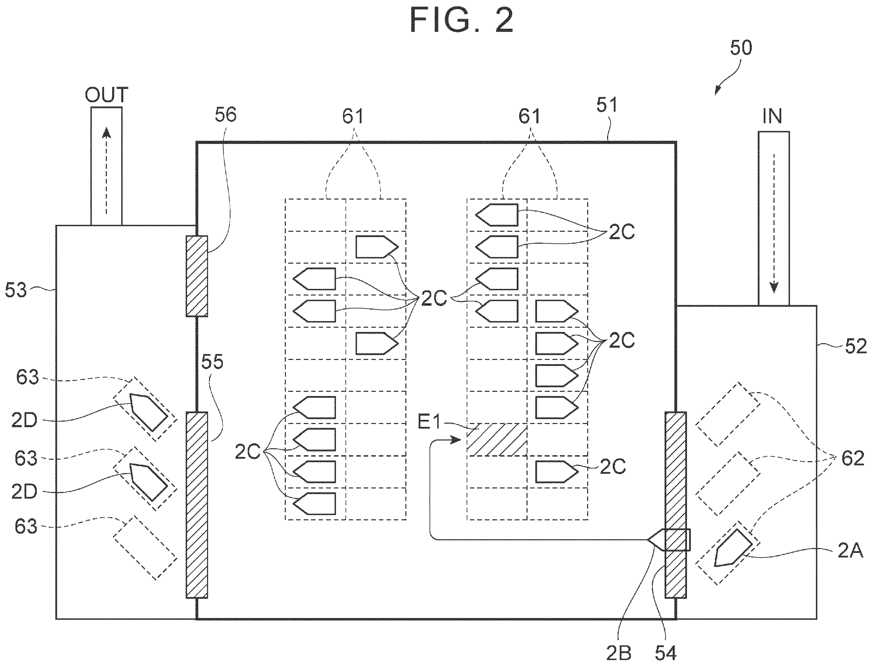

FIG. 2 is a plan showing an example of the parking place where the automated valet parking is performed. FIG. 2 shows a parking place 50, a parking area 51, a drop-off area 52, and a pick-up area 53. The parking place 50 includes the parking area 51, the drop-off area 52, and the pick-up area 53. The drop-off area 52 and the pick-up area 53 need not be provided separately, and may be provided as an integrated drop-off and pick-up area.

The parking area 51 is a place including parking spaces 61 where the autonomous driving vehicles 2 are parked by the automated valet parking. As shown in FIG. 2, for example, a plurality of parking spaces 61 is arrayed in one direction (for example, a vehicle width direction for a parked vehicle).

The drop-off area 52 is provided on an entrance side of the parking place 50 as a place where occupants including the user drop off the autonomous driving vehicle 2 before entering the parking area. The drop-off area 52 includes drop-off spaces 62 where the autonomous driving vehicle 2 stops when the occupant drops off. The drop-off area 52 leads to the parking area 51 via an entry gate 54.

The pick-up area 53 is provided on an exit side of the parking place 50 as a place where occupants are picked up by the autonomous driving vehicle 2 that has exited the parking area. The pick-up area 53 includes pick-up spaces 63 where the autonomous driving vehicle 2 stands by to pick up the occupants. The pick-up area 53 leads to the parking area 51 via an exit gate 55. The parking space 61, the drop-off space 62, and the pick-up space 63 each serve as the target parking space that is a target of parking (including stopping) of the autonomous driving vehicle 2. A return gate 56 for returning the autonomous driving vehicle 2 from the pick-up area 53 to the parking area 51 is provided between the pick-up area 53 and the parking area 51. The return gate 56 is not essential.

FIG. 2 shows an autonomous driving vehicle 2A stopped in the drop-off space 62 of the drop-off area 52, an autonomous driving vehicle 2B traveling in the parking place 50, an autonomous driving vehicle 2C parked in the parking space 61 of the parking area 51, and an autonomous driving vehicle 2D stopped in the pick-up space 63 of the pick-up area 53.

For example, in the automated valet parking system 1, the automated valet parking is started by obtaining instruction authority for the autonomous driving vehicle 2 from the user after the autonomous driving vehicle 2 that has entered the parking place 50 drops off the occupant in the drop-off space 62 (corresponding to the autonomous driving vehicle 2A). The automated valet parking system 1 drives the autonomous driving vehicle 2B that has entered the parking area 51, and automatically parks the autonomous driving vehicle 2B in a target parking space E1. When an exit request is received from the user, the automated valet parking system 1 drives the parked autonomous driving vehicle 2B toward the pick-up area 53, and automatically parks the autonomous driving vehicle 2B in the pick-up space 63 (corresponding to the autonomous driving vehicle 2D).

### Configuration of Automated Valet Parking System

Hereinafter, the configuration of the automated valet parking system 1 will be described with reference to the drawings. As shown in FIG. 1, the automated valet parking system 1 includes a parking place control server 10. The parking place control server 10 manages the parking place.

The parking place control server 10 is communicable with the autonomous driving vehicles 2. The parking place control server 10 may be provided in the parking place or in a facility remote from the parking place. The parking place control server 10 may be constituted by a plurality of computers provided at different locations. The parking place control server 10 is connected to a parking place sensor 3 and a parking place map database 4.

The parking place sensor 3 is used for recognizing a situation in the parking place. The parking place sensor 3 includes, for example, a surveillance camera for detecting the position of the autonomous driving vehicle 2 in the parking place. The surveillance camera is provided on the ceiling or wall of the parking place and images the autonomous driving vehicle 2 in the parking place. The surveillance camera transmits a captured image to the parking place control server 10.

The parking place sensor 3 may include a vacancy sensor for detecting whether vehicles are parked in the parking spaces (whether the parking spaces are full or vacant). The vacancy sensor may be provided for each parking space, or may be provided on the ceiling or the like so that a plurality of parking spaces can be monitored by one vacancy sensor. The configuration of the vacancy sensor is not particularly limited, and a well-known configuration can be adopted. The vacancy sensor may be a pressure sensor, a radar sensor or a sonar sensor using radio waves, or a camera. The vacancy sensor transmits vacancy information in the parking spaces to the parking place control server 10.

The parking place map database 4 stores parking place map information. The parking place map information includes information on the positions of the parking spaces in the parking place, and information on traveling paths in the parking place. The parking place map information may include position information of landmarks to be used for position recognition of the autonomous driving vehicles 2. The landmarks include at least one of white lines, poles, traffic cones, and parking place pillars.

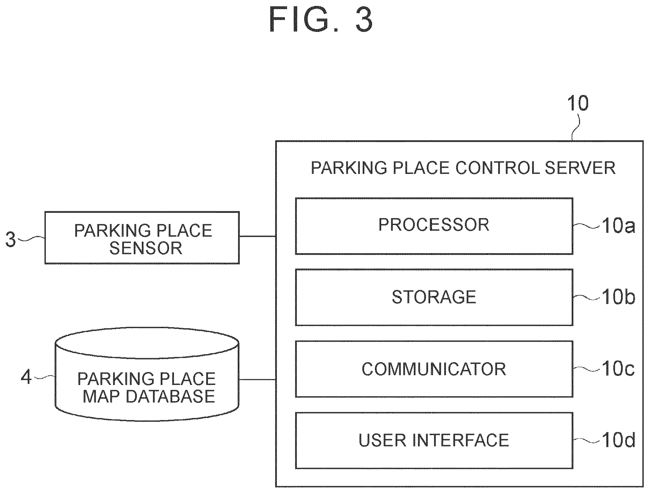

The hardware configuration of the parking place control server 10 will be described. FIG. 3 is a block diagram showing an example of the hardware configuration of the parking place control server. As shown in FIG. 3, the parking place control server 10 is a general computer including a processor 10a, a storage 10b, a communicator 10c, and a user interface 10d.

The processor 10a operates various operating systems to control the parking place control server 10. The processor 10a is an arithmetic unit such as a central processing unit (CPU) including a control device, an arithmetic device, a register, and the like. The processor 10a controls the storage 10b, the communicator 10c, and the user interface 10d. The storage 10b is a recording medium including, for example, at least one of a read only memory (ROM), a random access memory (RAM), a hard disk drive (HDD), and a solid state drive (SSD).

The communicator 10c is a communication device for performing wireless communication via a network. Examples of the communicator 10c include a network device, a network controller, and a network card. The parking place control server 10 communicates with the autonomous driving vehicles 2 by using the communicator 10c. The user interface 10d is an input/output unit of the parking place control server 10 for an administrator of the parking place control server 10. The user interface 10d includes an output device such as a display and a loudspeaker, and an input device such as a touch panel.

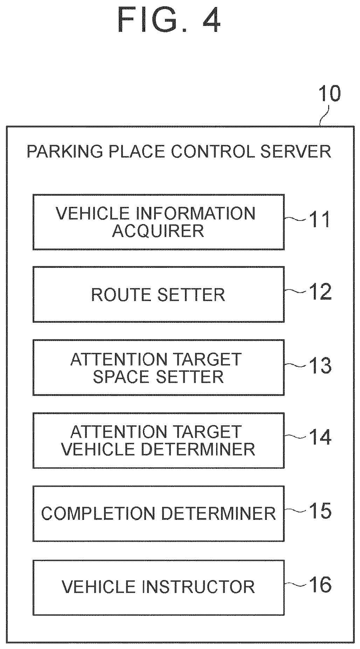

Next, the functional configuration of the parking place control server 10 will be described. FIG. 4 is a diagram showing an example of the functional configuration of the parking place control server 10. As shown in FIG. 4, the parking place control server 10 includes a vehicle information acquirer 11, a route setter 12, an attention target space setter 13, an attention target vehicle determiner 14, a completion determiner 15, and a vehicle instructor 16.

The vehicle information acquirer 11 acquires vehicle information of the autonomous driving vehicle 2 by communicating with the autonomous driving vehicle 2 in the parking place. The vehicle information includes identification information of the autonomous driving vehicle 2 and position information of the autonomous driving vehicle 2 in the parking place. The identification information may be any information that can identify the individual autonomous driving vehicle 2. Examples of the identification information include an identification number (ID number), a vehicle number, and a reservation number for automated valet parking. The vehicle information also includes entry and exit information related to entry or exit of the autonomous driving vehicle 2. The entry and exit information may include information related to a target parking space and a route.

The vehicle information may include a vehicle type of the autonomous driving vehicle 2, or a vehicle number in addition to the identification information. The vehicle information may include entry reservation information such as an entry reservation time, or an expected exit time. The vehicle information may include vehicle body information such as a turning radius, a size, and a vehicle width of the autonomous driving vehicle 2, or information related to the autonomous driving function of the autonomous driving vehicle 2. The information related to the autonomous driving function may include version information of the autonomous driving function.

The vehicle information may include results of recognition of traveling conditions (for example, a vehicle speed, an acceleration, and a yaw rate) of the autonomous driving vehicle 2, and results of recognition of an external environment (for example, a vehicle-to-vehicle distance from a preceding vehicle). The recognition of the traveling conditions and the external environment will be described later. The vehicle information may include information on the remaining travelable distance or the remaining fuel of the autonomous driving vehicle 2.

The vehicle information acquirer 11 continuously acquires the vehicle information from the autonomous driving vehicle 2 during the automated valet parking. The vehicle information acquirer 11 may suspend the acquisition of the vehicle information when the autonomous driving vehicle 2 is parked, or may acquire the vehicle information periodically.

The route setter 12 sets a target parking space, an entry route, and an exit route of the autonomous driving vehicle 2. The autonomous driving vehicle 2 that is a target of entry in the automated valet parking is hereinafter referred to as "entry vehicle", and the autonomous driving vehicle 2 that is a target of exit in the automated valet parking is hereinafter referred to as "exit vehicle".

When the autonomous driving vehicle 2 is the entry vehicle, the route setter 12 sets a target parking space for parking the entry vehicle. The route setter 12 sets the target parking space for parking the entry vehicle among vacant parking spaces 61 based on the parking place map information in the parking place map database 4 and the vehicle information. The method for determining the target parking space is not particularly limited.

The route setter 12 sets the entry route for the entry vehicle to reach the target parking space based on a current position of the entry vehicle, the target parking space of the entry vehicle, and the parking place map information. A position of the entrance of the parking place may be used as the current position of the entry vehicle. For example, the route setter 12 sets, as the entry route, a route for the entry vehicle to reach the target parking space within the shortest period. The route setter 12 may set the entry route so as not to interfere with routes of other autonomous driving vehicles 2 that are entering or exiting the parking area. When the entry vehicle needs to swivel or turn back to park in the target parking space, the route setter 12 sets an entry route including the swivel or turn-back motion.

When the autonomous driving vehicle 2 is the exit vehicle, the route setter 12 sets a vacant pick-up space 63 as a target parking space of the exit vehicle among the pick-up spaces 63 of the pick-up area 53 where the exit vehicle waits for the user. If there is only one pick-up space 63, it is not necessary to set the target parking space for the exit vehicle.

The route setter 12 sets the exit route for the exit vehicle toward the exit of the parking place based on an exit target space that is a parking space 61 where the exit vehicle is parked, the target parking space, and the parking place map information. The exit route can be set by a method similar to that for the entry route. If there is only one pick-up space 63, there is no need for the information on the target parking space of the exit vehicle.

The attention target space setter 13 sets an attention target space for each of the entry vehicle and the exit vehicle. First, the setting of the attention target space in the case of the entry vehicle will be described.

The attention target space setter 13 sets, for the target parking space of the entry vehicle, an attention target space that is a parking space 61 that affects the entry of the entry vehicle when any other vehicle is entering or exiting the attention target space among the parking spaces 61 around the target parking space.

The parking spaces around the target parking space may be parking spaces 61 within a range of a predetermined distance from the target parking space, may be parking spaces 61 adjacent to the target parking space on its front, rear, right, and left sides, or may include parking spaces 61 adjacent to the parking spaces 61 adjacent to the target parking space. The parking spaces 61 adjacent to the target parking space may include a parking space 61 adjacent to the target parking space across a traveling path in the parking place. The range of the parking spaces 61 around the target parking space may be predetermined for each target parking space.

The attention target space setter 13 sets the attention target space based on, for example, the target parking space of the entry vehicle, the entry route, and the parking place map information. The attention target space setter 13 may set, as the attention target space, parking spaces 61 along the entry route (such as parking spaces 61 near the entry route) among the parking spaces 61 around the target parking space.

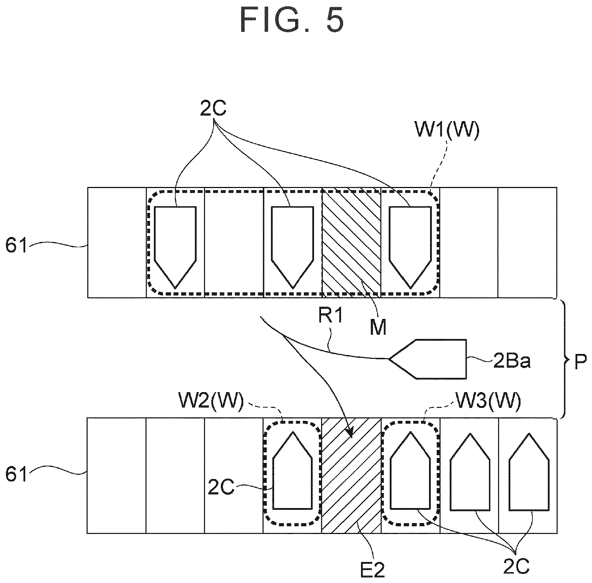

FIG. 5 is a diagram illustrating an example of the setting of the attention target space for the entry vehicle. FIG. 5 shows an entry vehicle 2Ba, an entry route R1, a traveling path P, a target parking space E2, a facing parking space M, and attention target spaces W. Although the entry vehicle 2Ba is shown in FIG. 5 for the sake of clarity, the entry vehicle 2Ba has not started entry to the parking place 50 at a timing when the attention target spaces W are set.

The entry route R1 is a route along which the entry vehicle 2Ba swivels and parks in the target parking space E2 from the rear. The facing parking space M is a parking space facing the target parking space E2 across the traveling path P in the parking place.

In the situation shown in FIG. 5, the attention target spaces W include first attention target spaces W1, a second attention target space W2, and a third attention target space W3. The first attention target spaces W1 are the facing parking space M and a plurality of parking spaces 61 arrayed side by side with the facing parking space M. The second attention target space W2 is a parking space 61 located on a left side of the target parking space E2. The third attention target space W3 is a parking space 61 located on a right side of the target parking space E2.

In a case where the entry vehicle 2Ba swivels, the attention target space setter 13 sets the first attention target spaces W1 to include a plurality of parking spaces 61 located on a left side of the facing parking space M (beyond the target parking space E2 when viewed from the entry vehicle 2Ba approaching the target parking space E2). The number of parking spaces 61 to be added on the left side may be one, two, three, or more. In a case where the entry vehicle 2Ba does not swivel (does not approach the facing parking space M), the attention target space setter 13 need not essentially set the first attention target spaces W1 including the facing parking space M.

The attention target space setter 13 may or may not set the first attention target spaces W1 to include a parking space 61 on a right side of the facing parking space M (behind the target parking space E2 when viewed from the entry vehicle 2Ba approaching the target parking space E2). The attention target space setter 13 may set the first attention target spaces W1 to include the parking space on the right side of the facing parking space M in a case where the entry vehicle 2Ba approaches the parking space to turn back to park in the target parking space E2.

The attention target space setter 13 sets right and left parking spaces 61 around the target parking space E2 as the second attention target space W2 and the third attention target space W3. Out of the right and left parking spaces 61 around the target parking space E2, the attention target space setter 13 may set only the parking space 61 closer to the approaching entry vehicle 2Ba as the attention target space W.

In a case where the target parking space E2 is in contact with the traveling path P and a parking space 61 is present behind the target parking space E2 (there is a parking space that cannot be reached unless the entry vehicle passes through the target parking space E2), the attention target space setter 13 may set the attention target spaces W to include the parking space behind the target parking space E2.

The method for setting the attention target space by the attention target space setter 13 is not particularly limited. The attention target space setter 13 may set the attention target space W based on a distance from the entry route. Among the parking spaces 61 around the target parking space E2, the attention target space setter 13 may set parking spaces within a range of a predetermined distance from the entry route R1 as the attention target spaces W. The attention target space setter 13 may calculate contact risks based on relationships between the entry route R1 and assumed routes of vehicles entering and exiting the parking spaces 61, and set, as the attention target spaces W, parking spaces whose contact risks are equal to or higher than a predetermined threshold. For example, the contact risks increase as the routes are closer to each other, and may be the maximum value when the routes intersect each other.

The attention target space setter 13 may set the attention target space W based on the target parking space E2 and a direction of approach of the entry vehicle 2Ba to the target parking space E2. The direction of approach of the entry vehicle 2Ba to the target parking space E2 may be recognized based on the entry route R1 or entrance position information of the parking place 50.

The attention target space setter 13 may set the attention target space W based on the target parking space E2 of the entry vehicle 2Ba and the parking place map information instead of using the entry route R1. For example, the attention target space setter 13 sets the attention target space W among the parking spaces 61 around the target parking space E2 by referring to table data indicating a positional relationship between the target parking space E2 and the attention target space W associated with each other in advance.

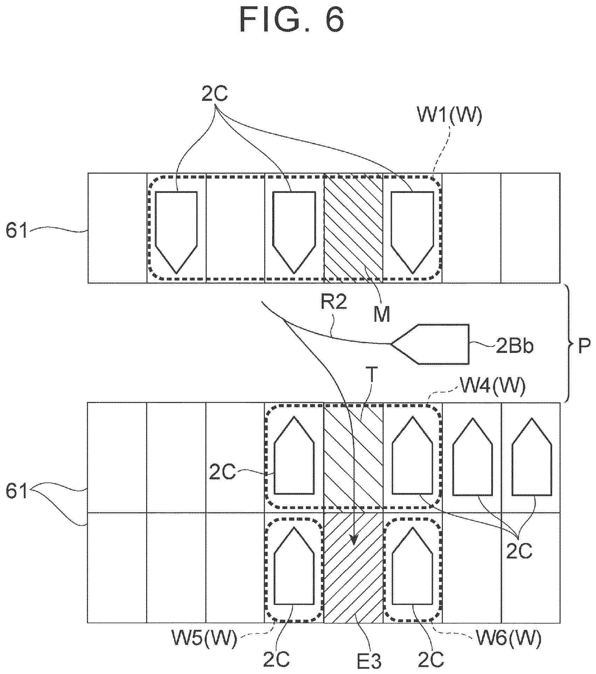

FIG. 6 is a diagram illustrating another example of the setting of the attention target space for the entry vehicle. FIG. 6 shows an entry vehicle 2Bb, an entry route R2, a target parking space E3, a passage target space T, fourth attention target spaces W4, a fifth attention target space W5, and a sixth attention target space W6. The entry route R2 is a route along which the entry vehicle 2Bb swivels and then parks in the target parking space E3. The passage target space T is a parking space 61 between the target parking space E3 and the traveling path P. Although the entry vehicle 2Bb is shown in FIG. 6 for the sake of clarity, the entry vehicle 2Bb has not started entry to the parking place 50 at a timing when the attention target spaces W are set.

In FIG. 6, the target parking space E3 that is not in contact with the traveling path P is set as the target parking space of the entry vehicle 2Bb. In order that the entry vehicle 2Bb can reach the target parking space E3 from the traveling path P, the entry vehicle 2Bb needs to pass through the passage target space T in contact with the traveling path P.

In the situation shown in FIG. 6, the attention target space setter 13 sets the fourth attention target spaces W4, the fifth attention target space W5, and the sixth attention target space W6 as the attention target spaces in addition to the same first attention target spaces W1 as those in FIG. 5. The fourth attention target spaces W4 include the passage target space T and right and left parking spaces around the passage target space T. The fifth attention target space W5 is a parking space on a left side of the target parking space E3. The sixth attention target space W6 is a parking space on a right side of the target parking space E3. FIG. 6 shows an example, and the range of the attention target spaces W can be changed as appropriate.

Next, the setting of the attention target space in the case of the exit vehicle will be described. The attention target space setter 13 sets, for the exit target space of the exit vehicle, an attention target space W that is a parking space 61 that affects the exit of the exit vehicle when any other vehicle is entering or exiting the attention target space among the parking spaces 61 around the exit target space where the exit vehicle is parked. The parking spaces 61 around the exit target space can be defined in the same manner as that for the attention target spaces around the target parking space of the entry vehicle.

The attention target space setter 13 sets the attention target space based on, for example, the exit target space, the exit route, and the parking place map information including exit position information of the parking place. The attention target space setter 13 may set, as the attention target space, parking spaces 61 along the exit route (parking spaces 61 near the exit route) among the parking spaces 61 around the exit target space.

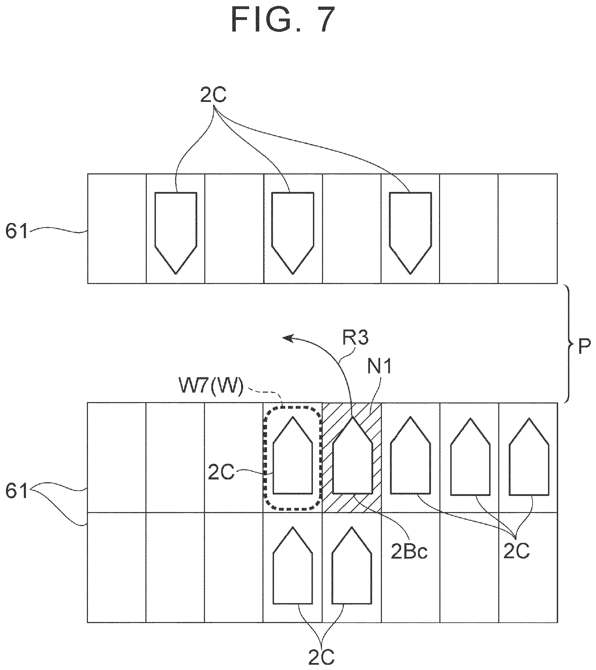

FIG. 7 is a diagram illustrating an example of the setting of the attention target space for the exit vehicle. FIG. 7 shows an exit vehicle 2Bc, an exit route R3, an exit target space N1, and a seventh attention target space W7. The exit target space N1 is in contact with the traveling path P, and the exit route R3 is a route along which the exit vehicle turns left from the exit target space N1 and travels on the traveling path P.

In the situation shown in FIG. 7, among the parking spaces 61 adjacent to the exit target space N1 in contact with the traveling path P in the parking place 50, the attention target space setter 13 sets a parking space 61 located in a direction along the exit route R3 as the seventh attention target space W7, and does not set parking spaces 61 that are not located in the direction along the exit route R3 as the attention target spaces.

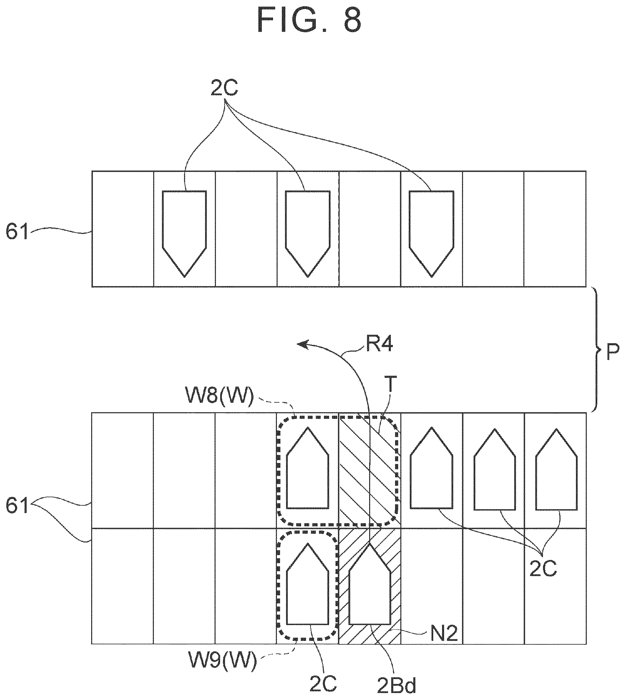

FIG. 8 is a diagram illustrating another example of the setting of the attention target space for the exit vehicle. FIG. 8 shows an exit vehicle 2Bd, an exit route R4, an exit target space N2, eighth attention target spaces W8, and a ninth attention target space W9. The exit target space N2 is not in contact with the traveling path P, and the exit vehicle 2Bd can move out to the traveling path P through a passage target space T.

In the situation shown in FIG. 8, the attention target space setter 13 sets the passage target space T in front of the exit target space N2 and a parking space 61 on a left side of the passage target space T (in a direction along the exit route R4) as the eighth attention target spaces W8. The attention target space setter 13 sets a parking space 61 on a left side of the exit target space N2 (in a direction along the exit route R4) as the ninth attention target space W9. The setting of the ninth attention target space W9 is not essential.

The attention target vehicle determiner 14 determines whether an attention target vehicle is present based on the attention target space W, the parking place map information, and the vehicle information. The attention target vehicle is an autonomous driving vehicle 2 that is entering or exiting the attention target space W.

The attention target vehicle may include a vehicle that may affect the entry vehicle or the exit vehicle among move-aside vehicles that are autonomous driving vehicles 2 moving aside temporarily. The move-aside vehicles include a vehicle temporarily moving aside into the attention target space W from the parking space 61, and a vehicle temporarily moving aside into the traveling path P in the parking place from the attention target space W where the vehicle is parked.

In the case shown in, for example, FIG. 5, when any autonomous driving vehicle 2 is expected to enter the facing parking space M prior to the entry vehicle 2Ba, the attention target vehicle determiner 14 determines this autonomous driving vehicle 2 as the attention target vehicle. When an autonomous driving vehicle 2C parked in the second attention target space W2 adjacent to the target parking space E2 is expected to exit prior to the entry vehicle 2Ba, the attention target vehicle determiner 14 determines the autonomous driving vehicle 2C as the attention target vehicle.

In the case shown in, for example, FIG. 7, when an autonomous driving vehicle 2C parked in the seventh attention target space W7 is expected to exit prior to the exit vehicle 2Bc, the attention target vehicle determiner 14 determines the autonomous driving vehicle 2C as the attention target vehicle. The same applies to the autonomous driving vehicles 2 that enter or exit the other attention target spaces W.

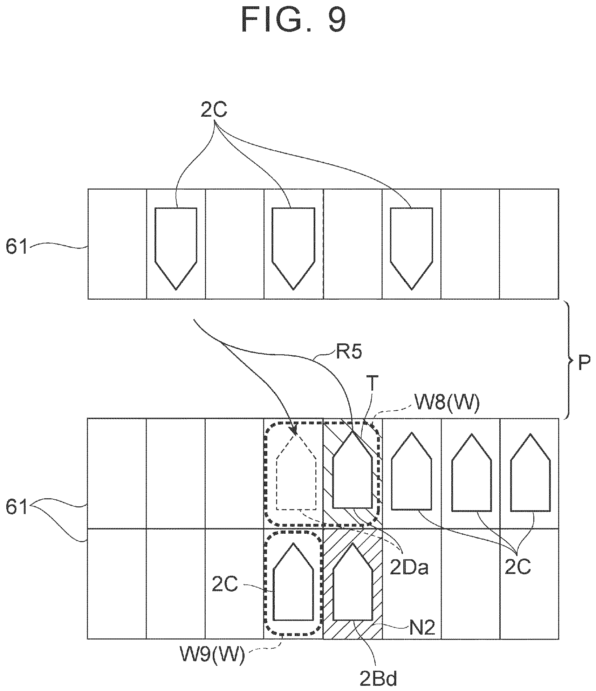

FIG. 9 is a diagram illustrating an example of the move-aside vehicle included in the attention target vehicles. FIG. 9 shows a move-aside vehicle 2Da and a move-aside route R5. Since the move-aside vehicle 2Da is parked in the passage target space T, the move-aside vehicle 2Da needs to move aside temporarily in order that the exit vehicle 2Bd can exit. The move-aside route R5 is a route along which the move-aside vehicle 2Da moves aside from the passage target space T into the parking space 61 on the left side (parking space 61 in the eighth attention target spaces W8). Although illustration is omitted in FIG. 9, the exit vehicle 2Bd is expected to exit along the exit route R4 toward the left side of the traveling path P as shown in FIG. 8.

In the case shown in FIG. 9, the attention target vehicle determiner 14 determines the move-aside vehicle 2Da as the attention target vehicle because the move-aside vehicle 2Da moves aside into the eighth attention target space W8. In a case where the move-aside vehicle 2Da moves aside into a parking space 61 other than the attention target space W, the attention target vehicle determiner 14 need not determine the move-aside vehicle 2Da as the attention target vehicle.

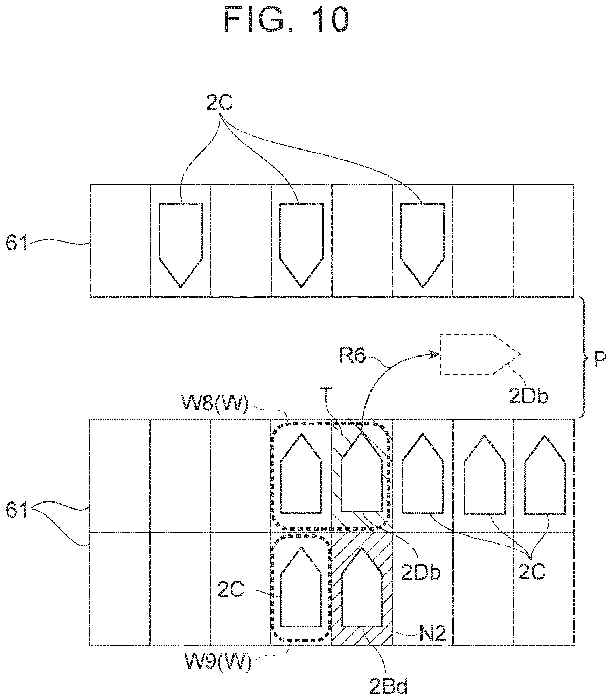

FIG. 10 is a diagram illustrating an example of the move-aside vehicle that is not included in the attention target vehicles. FIG. 10 shows a move-aside vehicle 2Db and a move-aside route R6. Since the move-aside vehicle 2Db is parked in the passage target space T, the move-aside vehicle 2Db needs to move aside temporarily in order that the exit vehicle 2Bd can exit. The move-aside route R6 is a route along which the move-aside vehicle 2Db turns right from the passage target space T and moves aside into the traveling path P. The move-aside vehicle 2Db may be parked again in the original passage target space T after waiting for the exit vehicle 2Bd to exit, or may be parked in a parking space 61 other than the attention target space W without returning to the passage target space T. In FIG. 10 as well, the exit vehicle 2Bd is expected to exit along the exit route R4 toward the left side of the traveling path P as shown in FIG. 8.

In the situation shown in FIG. 10, the attention target vehicle determiner 14 does not determine the move-aside vehicle 2Db as the attention target vehicle because the move-aside vehicle 2Db on the exit route R4 of the exit vehicle 2Bd moves aside from the exit route R4 (see FIG. 8).

The completion determiner 15 determines whether all the attention target vehicles determined by the attention target vehicle determiner 14 have completed the entry or the exit from the parking spaces. The completion of the entry of the attention target vehicle means that the attention target vehicle expected to enter the parking space has completed parking in the target parking space set for the attention target vehicle. The completion of the entry of the attention target vehicle includes a case where the move-aside vehicle to be parked or temporarily stopped in a parking space to move aside has completed the parking or stop.

The completion of the exit of the attention target vehicle from the parking space means that the attention target vehicle expected to exit the parking space has completed the exit from the current parking space by starting from the parking space. The exit from the parking space may be determined as being completed when the distance from the current parking space is equal to or longer than a predetermined distance. The exit from the parking space may be determined as being completed when the distance from the target parking space of the entry vehicle or the exit target space of the exit vehicle in place of the parking space 61 of the attention target vehicle is equal to or longer than a predetermined distance.

The completion determiner 15 determines whether all the attention target vehicles have completed the entry or the exit from the parking spaces based on the parking place map information and the vehicle information (including the position information and the entry and exit information of each autonomous driving vehicle 2).

The vehicle instructor 16 gives various instructions to the autonomous driving vehicles 2 to execute the automated valet parking. When the attention target vehicle determiner 14 determines for the entry vehicle that the attention target vehicles are present, the vehicle instructor 16 gives an entry start instruction to the entry vehicle after waiting for the determination by the completion determiner 15 that all the attention target vehicles have completed the entry or the exit from the parking spaces.

Even if there is a non-attention target vehicle that is an autonomous driving vehicle entering or exiting a parking space other than the attention target space, the vehicle instructor 16 gives the entry start instruction to the entry vehicle without waiting for the non-attention target vehicle to complete the entry or the exit from the parking space.

The entry start instruction is an instruction for the entry vehicle to start entry by the automated valet parking. The entry start instruction includes, for example, a target parking space of the entry vehicle and/or an entry route to the target parking space. The entry start instruction may include a target value related to a vehicle speed of the entry vehicle during traveling along the entry route.

The entry start instruction may include vehicle information such as positions of the autonomous driving vehicles 2 in the parking place. Alternatively, the entry start instruction may include, instead of the vehicle information, obstacle information including only information on, for example, the outlines of the autonomous driving vehicles 2 parked in the parking place. The obstacle information may be limited to an area along the entry route. The entry start instruction need not include information on the autonomous driving vehicles 2 other than the attention target vehicles.

When the attention target vehicle determiner 14 determines for the exit vehicle that the attention target vehicles are present, the vehicle instructor 16 gives an exit start instruction to the exit vehicle after waiting for the determination by the completion determiner 15 that all the attention target vehicles have completed the entry or the exit from the parking spaces. Even if there is a non-attention target vehicle that is an autonomous driving vehicle entering or exiting a parking space other than the attention target space W, the vehicle instructor 16 gives the exit start instruction to the exit vehicle without waiting for the non-attention target vehicle to complete the entry or the exit from the parking space.

The exit start instruction is an instruction for the exit vehicle to start exit by the automated valet parking. The exit start instruction includes, for example, a pick-up space 63 where the exit vehicle waits for the user and/or an exit route to the pick-up space 63. The exit start instruction may include a target value related to a vehicle speed of the exit vehicle during traveling along the exit route.

The exit start instruction may include vehicle information such as positions of the autonomous driving vehicles 2 in the parking place. Alternatively, the exit start instruction may include, instead of the vehicle information, obstacle information including only information on, for example, the outlines of the autonomous driving vehicles 2 parked in the parking place. The obstacle information may be limited to an area along the exit route. The exit start instruction need not include information on the autonomous driving vehicles 2 other than the attention target vehicles.

### Program

A program causes the processor 10a of the parking place control server 10 to function (operate) as the vehicle information acquirer 11, the route setter 12, the attention target space setter 13, the attention target vehicle determiner 14, the completion determiner 15, and the vehicle instructor 16 described above. The program causes the communicator 10c of the parking place control server 10 to function (operate) as the vehicle information acquirer 11 and the vehicle instructor 16. The program is provided by the storage 10b of the parking place control server 10, for example, by a non-transitory recording medium such as a ROM or a semiconductor memory. The program may also be provided by communication via a network or the like.

### Control Method for Automated Valet Parking System

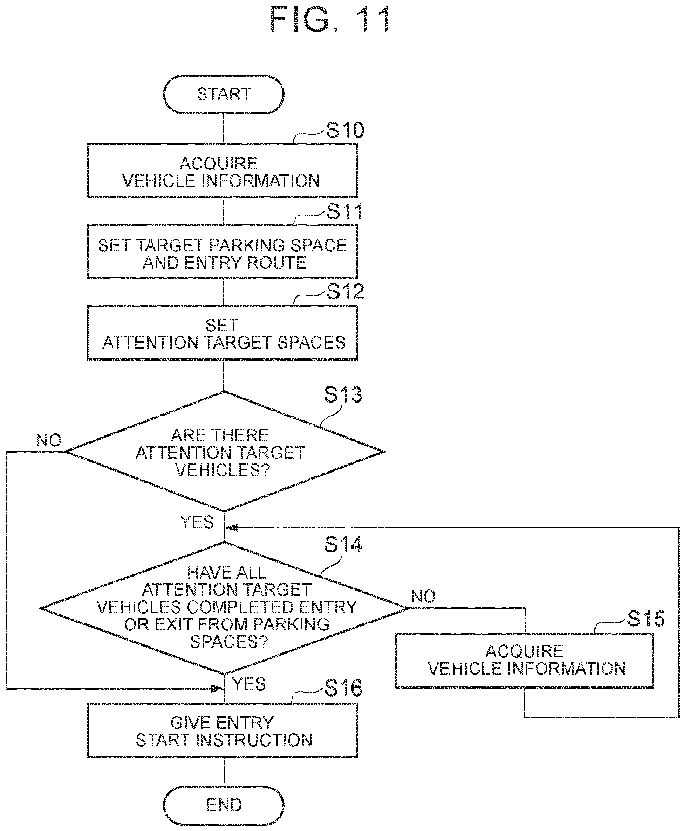

Next, an example of a control method for the automated valet parking system 1 according to an embodiment useful for understanding the invention will be described. FIG. 11 is a flowchart showing an example of an entry start instruction process. The entry start instruction process is executed, for example, when the parking place control server 10 recognizes an entry vehicle expected to enter the parking place 50. For example, the parking place control server 10 recognizes the entry vehicle when the user parks the autonomous driving vehicle 2 in the drop-off space 62 to drop off and the parking place control server 10 receives an entry request from the user.

In S10 of FIG. 11, the parking place control server 10 of the automated valet parking system 1 causes the vehicle information acquirer 11 to acquire vehicle information of the autonomous driving vehicles 2 in the parking place (vehicle information acquisition step).

In S11, the parking place control server 10 causes the route setter 12 to set a target parking space and an entry route of the entry vehicle (route setting step). The route setter 12 sets the target parking space and the entry route based on the parking place map information and the vehicle information.

In S12, the parking place control server 10 causes the attention target space setter 13 to set attention target spaces W (attention target space setting step). The attention target space setter 13 sets, for the target parking space of the entry vehicle, attention target spaces W that are parking spaces 61 that affect the entry of the entry vehicle when any other vehicle is entering or exiting the attention target spaces among the parking spaces 61 around the target parking space.

In S13, the parking place control server 10 causes the attention target vehicle determiner 14 to determine whether attention target vehicles are present (attention target vehicle determination step). The attention target vehicle determiner 14 determines whether the attention target vehicles are present based on the attention target spaces W, the parking place map information, and the vehicle information. When determination is made that the attention target vehicles are present (S13: YES), the parking place control server 10 proceeds to S14. When determination is not made that the attention target vehicles are present (S13: NO), the parking place control server 10 proceeds to S16.

In S14, the parking place control server 10 causes the completion determiner 15 to determine whether all the attention target vehicles have completed entry or exit from the parking spaces (completion determination step). The completion determiner 15 makes the above determination based on the parking place map information and the vehicle information. When determination is made that all the attention target vehicles have completed the entry or the exit from the parking spaces (S14: YES), the parking place control server 10 proceeds to S16. When determination is not made that all the attention target vehicles have completed the entry or the exit from the parking spaces (S14: NO), the parking place control server 10 proceeds to S15.

In S15, the parking place control server 10 causes the vehicle information acquirer 11 to reacquire the vehicle information of the autonomous driving vehicles 2 in the parking place (vehicle information reacquisition step). Then, the parking place control server 10 returns to S 14 to repeat the process.

In S 16, the parking place control server 10 causes the vehicle instructor 16 to give an entry start instruction to the entry vehicle (vehicle instruction step). For example, the vehicle instructor 16 transmits, to the entry vehicle, an entry start instruction including the target parking space, the entry route, and obstacle information. Then, the entry start instruction process is terminated.

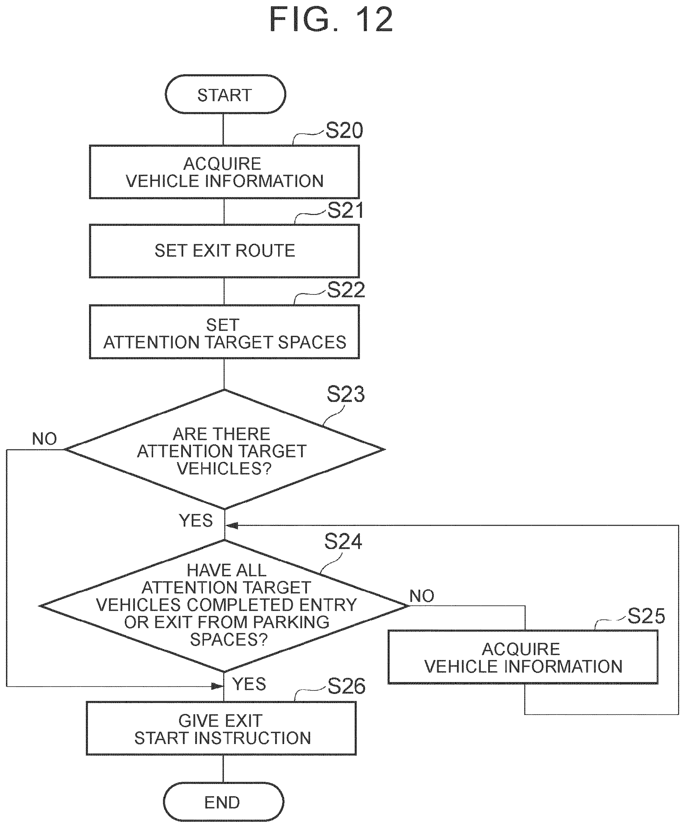

FIG. 12 is a flowchart showing an example of an exit start instruction process. The exit start instruction process is executed, for example, when the user gives an exit request to the parking place control server 10.

In S20 of FIG. 12, the parking place control server 10 of the automated valet parking system 1 causes the vehicle information acquirer 11 to acquire vehicle information of the autonomous driving vehicles 2 in the parking place (vehicle information acquisition step).

In S21, the parking place control server 10 causes the route setter 12 to set a pick-up space 63 for an exit vehicle and an exit route of the exit vehicle (route setting step). The route setter 12 sets the pick-up space 63 and the exit route based on the parking place map information and the vehicle information.

In S22, the parking place control server 10 causes the attention target space setter 13 to set attention target spaces W (attention target space setting step). The attention target space setter 13 sets, for an exit target space of the exit vehicle, attention target spaces W that are parking spaces 61 that affect the exit of the exit vehicle when any other vehicle is entering or exiting the attention target spaces among the parking spaces 61 around the exit target space where the exit vehicle is parked.

In S23, the parking place control server 10 causes the attention target vehicle determiner 14 to determine whether attention target vehicles are present (attention target vehicle determination step). The attention target vehicle determiner 14 determines whether the attention target vehicles are present based on the attention target spaces W, the parking place map information, and the vehicle information. When determination is made that the attention target vehicles are present (S23: YES), the parking place control server 10 proceeds to S24. When determination is not made that the attention target vehicles are present (S23: NO), the parking place control server 10 proceeds to S26.

In S24, the parking place control server 10 causes the completion determiner 15 to determine whether all the attention target vehicles have completed entry or exit from the parking spaces (completion determination step). The completion determiner 15 makes the above determination based on the parking place map information and the vehicle information. When determination is made that all the attention target vehicles have completed the entry or the exit from the parking spaces (S24: YES), the parking place control server 10 proceeds to S26. When determination is not made that all the attention target vehicles have completed the entry or the exit from the parking spaces (S24: NO), the parking place control server 10 proceeds to S25.

In S25, the parking place control server 10 causes the vehicle information acquirer 11 to reacquire the vehicle information of the autonomous driving vehicles 2 in the parking place (vehicle information reacquisition step). Then, the parking place control server 10 returns to S24 to repeat the process.

In S26, the parking place control server 10 causes the vehicle instructor 16 to give an exit start instruction to the exit vehicle (vehicle instruction step). For example, the vehicle instructor 16 transmits, to the exit vehicle, an exit start instruction including the pick-up space 63, the exit route, and obstacle information. Then, the exit start instruction process is terminated.

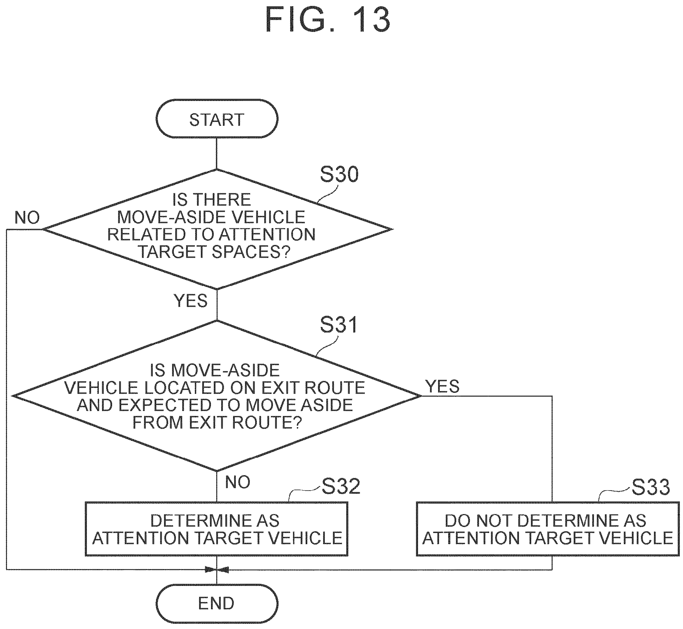

FIG. 13 is a flowchart showing an example of a move-aside vehicle determination process in an attention target vehicle setting step. The move-aside vehicle determination process is performed in the attention target vehicle determination step of S13 or S23.

In S30 of FIG. 13, the parking place control server 10 causes the attention target vehicle determiner 14 to determine whether there is a move-aside vehicle related to the attention target spaces W (move-aside vehicle determination step). When determination is made that there is a move-aside vehicle related to the attention target spaces W (S30: YES), the parking place control server 10 proceeds to S31. When determination is not made that there is a move-aside vehicle related to the attention target spaces W (S30: NO), the parking place control server 10 terminates the current move-aside vehicle determination process.

In S31, the parking place control server 10 causes the attention target vehicle determiner 14 to determine whether the move-aside vehicle is located on the exit route of the exit vehicle and moves aside from the exit route (move-aside direction determination step). When determination is made that the move-aside vehicle is located on the exit route of the exit vehicle and does not move aside from the exit route (S31: NO), the parking place control server 10 proceeds to S32. When determination is made that the move-aside vehicle is located on the exit route of the exit vehicle and moves aside from the exit route (S31: YES), the parking place control server 10 proceeds to S33.

In S32, the parking place control server 10 causes the attention target vehicle determiner 14 to determine the move-aside vehicle as the attention target vehicle (determination confirmation step). Then, the parking place control server 10 terminates the move-aside vehicle determination process. In S33, the parking place control server 10 causes the attention target vehicle determiner 14 not to determine the move-aside vehicle as the attention target vehicle (non-determination confirmation step). Then, the parking place control server 10 terminates the move-aside vehicle determination process.

The automated valet parking system 1 according to the embodiment described above sets the attention target spaces W that affect the entry of the entry vehicle when any other vehicle is entering or exiting the attention target spaces among the parking spaces 61 around the target parking space. Even if there is a non-attention target vehicle entering or exiting a parking space 61 other than the attention target spaces W, the automated valet parking system 1 gives the entry start instruction to the entry vehicle without waiting for the non-attention target vehicle to complete the entry or the exit from the parking space. Therefore, it is possible to improve the efficiency of use of the parking place of the automated valet parking as compared with a case where the entry start instruction is not given until the entry and exit are completed for all the vehicles around the target parking space.

According to the automated valet parking system 1, the attention target spaces W are set in consideration of the entry route of the entry vehicle. Therefore, the attention target spaces can be set not to include parking spaces where the entry or exit of other vehicles does not interfere with the entry route. Thus, it is possible to set appropriate attention target spaces. According to the automated valet parking system 1, the attention target vehicles include the move-aside vehicle. Therefore, it is possible to reduce the occurrence of a case where the move-aside vehicle related to the attention target spaces W affects the entry of the entry vehicle.

The automated valet parking system 1 sets the attention target spaces W that affect the exit of the exit vehicle when any other vehicle is entering or exiting the attention target spaces among the parking spaces 61 around the exit target space. Even if there is a non-attention target vehicle entering or exiting a parking space 61 other than the attention target spaces W, the automated valet parking system 1 gives the exit start instruction to the exit vehicle without waiting for the non-attention target vehicle to complete the entry or the exit from the parking space. Therefore, it is possible to improve the efficiency of use of the parking place of the automated valet parking as compared with a case where the exit start instruction is not given until the entry and exit are completed for all the vehicles around the exit target space.

According to the automated valet parking system 1, the attention target spaces are set in consideration of the exit route of the exit vehicle. Therefore, the attention target spaces can be set not to include parking spaces where the entry or exit of other vehicles does not interfere with the exit route. Thus, it is possible to set appropriate attention target spaces.

According to the automated valet parking system 1, parking spaces that are not located in the direction along the exit route and are presumed to have a small effect on the exit route are not set as the attention target spaces among the parking spaces adjacent to the exit target space in contact with the traveling path in the parking place. Therefore, it is not necessary to wait for the completion of entry and exit of other vehicles related to the parking spaces having a small effect. Thus, it is possible to improve the efficiency of use of the parking place.

According to the automated valet parking system 1, the attention target vehicles include the move-aside vehicle. Therefore, it is possible to reduce the occurrence of a case where the move-aside vehicle related to the attention target spaces affects the exit of the exit vehicle. According to the automated valet parking system 1, the move-aside vehicle that moves aside from the exit route has a small possibility of affecting the exit of the exit vehicle. Therefore, it is possible to improve the efficiency of use of the parking place by excluding this move-aside vehicle from the attention target vehicles.

The attention target vehicle determiner 14 need not determine the move-aside vehicle as the attention target vehicle. The attention target vehicle determiner 14 may set only an autonomous driving vehicle 2 that enters or exits the parking space as the attention target vehicle.

In the situation shown in FIG. 7, the attention target space setter 13 may set a parking space 61 that is not located in the direction along the exit route R3 as the attention target space W. In the situation shown in FIG. 10, the attention target vehicle determiner 14 may determine the move-aside vehicle 2Db as the attention target vehicle.

## Claims

1. An automated valet parking system (1) configured to perform automated valet parking for automatically parking autonomous driving vehicles (2) in target parking spaces set among a plurality of parking spaces (61) in a parking place (50), the automated valet parking system (1) comprising:
a vehicle information acquirer (11) configured to acquire vehicle information including position information of the autonomous driving vehicles (2) in the parking place (50) and entry and exit information of the autonomous driving vehicles (2);
an attention target space setter (13) configured to set, based on an exit target space where an exit vehicle that is an autonomous driving vehicle (2) serving as an exit target in the automated valet parking is parked and parking place map information including exit position information of the parking place, attention target spaces (W) that are the parking spaces that affect exit of the exit vehicle when any other vehicle is entering or exiting the attention target spaces (W) among the parking spaces (61) around the exit target space;
a route setter (12) configured to set an exit route for the exit vehicle toward an exit of the parking place based on the exit target space and the parking place map information, wherein the attention target space setter (13) is configured to set the attention target spaces (W) based on the exit route and the parking place map information;
an attention target vehicle determiner (14) configured to determine whether attention target vehicles that are the autonomous driving vehicles (2) entering or exiting the attention target spaces (W) are present based on the attention target spaces (W), the parking place map information, and the vehicle information;
a completion determiner (15) configured to, when the attention target vehicle determiner (14) determines that the attention target vehicles are present, determine whether all the attention target vehicles have completed entry or exit from the parking spaces (61) based on the parking place map information and the vehicle information; and
a vehicle instructor (16) configured to, when the attention target vehicle determiner (14) determines that the attention target vehicles are present, give an exit start instruction to the exit vehicle after the completion determiner (15) determines that all the attention target vehicles have completed the entry or the exit from the parking spaces (61);
wherein the vehicle instructor (16) is configured to, even when there is a non-attention target vehicle that is an autonomous driving vehicle entering or exiting a parking space other than the attention target space (W), give the exit start instruction to the exit vehicle without waiting for the non-attention target vehicle to complete the entry or the exit from the parking space;
the attention target space setter (13) is configured to set a parking space (61) located in a direction along the exit route as the attention target space (W) among the parking spaces (61) adjacent to the exit target space in contact with a traveling path in the parking place (50), and not to set a parking space (61) that is not located in the direction along the exit route as an attention target space (W);
the attention target vehicles include a move-aside vehicle that is an autonomous driving vehicle (2) temporarily moving aside into an attention target space (W) or temporarily moving aside into a traveling path in the parking place (50) from the attention target space (W);
the attention target vehicles do not include a move-aside vehicle that is located on the exit route of the exit vehicle and moves aside from the exit route.

2. A control method for an automated valet parking system (1) configured to perform automated valet parking for automatically parking autonomous driving vehicles (2) in target parking spaces set among a plurality of parking spaces (61) in a parking place (50), the control method comprising:
acquiring vehicle information including position information of the autonomous driving vehicles (2) in the parking place (50) and entry and exit information of the autonomous driving vehicles (2);
setting, based on an exit target space where an exit vehicle that is an autonomous driving vehicle (2) serving as an exit target in the automated valet parking is parked and parking place map information including exit position information of the parking place (50), attention target spaces (W) that are the parking spaces that affect exit of the exit vehicle when any other vehicle is entering or exiting the attention target spaces (W) among the parking spaces (61) around the exit target space;
setting an exit route for the exit vehicle toward an exit of the parking place based on the exit target space and the parking place map information, wherein the attention target spaces (W) are set based on the exit route and the parking place map information;
determining whether attention target vehicles that are the autonomous driving vehicles (2) entering or exiting the attention target spaces (W) are present based on the attention target spaces (W), the parking place map information, and the vehicle information;
when determination is made that the attention target vehicles are present, determining whether all the attention target vehicles have completed entry or exit from the parking spaces (61) based on the parking place map information and the vehicle information; and
when determination is made that the attention target vehicles are present, giving an exit start instruction to the exit vehicle after determination is made that all the attention target vehicles have completed the entry or the exit from the parking spaces (61);
wherein, even when there is a non-attention target vehicle that is an autonomous driving vehicle entering or exiting a parking space other than the attention target space (W), the exit start instruction is given to the exit vehicle without waiting for the non-attention target vehicle to complete the entry or the exit from the parking space;
setting the attention target spaces (W) comprises setting a parking space (61) located in a direction along the exit route as the attention target space (W) among the parking spaces (61) adjacent to the exit target space in contact with a traveling path in the parking place (50), and not setting a parking space (61) that is not located in the direction along the exit route as an attention target space (W);
the attention target vehicles include a move-aside vehicle that is an autonomous driving vehicle (2) temporarily moving aside into an attention target space (W) or temporarily moving aside into a traveling path in the parking place (50) from the attention target space (W);
the attention target vehicles do not include a move-aside vehicle that is located on the exit route of the exit vehicle and moves aside from the exit route.

3. A non-transitory storage medium (10b) storing instructions that are executable by a server (10) including one or more processors (10a) and that cause the server (10) to perform automated valet parking for automatically parking autonomous driving vehicles (2) in target parking spaces set among a plurality of parking spaces (61) in a parking place (50), the instructions causing the server (10) including the one or more processors (10a) to perform functions comprising:
acquiring vehicle information including position information of the autonomous driving vehicles (2) in the parking place (50) and entry and exit information of the autonomous driving vehicles (2);
setting, based on an exit target space where an exit vehicle that is an autonomous driving vehicle (2) serving as an exit target in the parking place (50) is parked and parking place map information including exit position information of the parking place (50), attention target spaces (W) that are the parking spaces that affect exit of the exit vehicle when any other vehicle is entering or exiting the attention target spaces (W) among the parking spaces (61) around the exit target space;
setting an exit route for the exit vehicle toward an exit of the parking place based on the exit target space and the parking place map information, wherein the attention target spaces (W) are set based on the exit route and the parking place map information;
determining whether attention target vehicles that are the autonomous driving vehicles (2) entering or exiting the attention target spaces (W) are present based on the parking place map information and the vehicle information;
when determination is made that the attention target vehicles are present, determining whether all the attention target vehicles have completed entry or exit from the parking spaces (61) based on the parking place map information and the vehicle information; and
when determination is made that the attention target vehicles are present, giving an exit start instruction to the exit vehicle after determination is made that all the attention target vehicles have completed the entry or the exit from the parking spaces (61);
wherein, even when there is a non-attention target vehicle that is an autonomous driving vehicle entering or exiting a parking space other than the attention target space (W), the exit start instruction is given to the exit vehicle without waiting for the non-attention target vehicle to complete the entry or the exit from the parking space;
setting the attention target spaces (W) comprises setting a parking space (61) located in a direction along the exit route as the attention target space (W) among the parking spaces (61) adjacent to the exit target space in contact with a traveling path in the parking place (50), and not setting a parking space (61) that is not located in the direction along the exit route as an attention target space (W);
the attention target vehicles include a move-aside vehicle that is an autonomous driving vehicle (2) temporarily moving aside into an attention target space (W) or temporarily moving aside into a traveling path in the parking place (50) from the attention target space (W);
the attention target vehicles do not include a move-aside vehicle that is located on the exit route of the exit vehicle and moves aside from the exit route.

## Patentansprüche

1. Automatisiertes Valet-Parksystem (1), das konfiguriert ist, um automatisiertes Valet-Parken für automatisch parkende autonom fahrende Fahrzeuge (2) in Zielparklücken durchzuführen, die inmitten einer Vielzahl von Parklücken (61) in einem Parkplatz (50) festgelegt sind, wobei das automatisierte Valet-Parksystem (1) Folgendes umfasst:
eine Einrichtung zur Erfassung von Fahrzeuginformationen (11), die konfiguriert ist, um Fahrzeuginformationen einschließlich Positionsinformationen der autonom fahrenden Fahrzeuge (2) in dem Parkplatz (50) und Einfahrts- und Ausfahrtsinformationen der autonom fahrenden Fahrzeuge (2) zu erfassen;
eine Einrichtung zur Festlegung eines Aufmerksamkeitszielbereichs (13), die konfiguriert ist, um, basierend auf einem Ausfahrtszielbereich, wo ein Ausfahrtsfahrzeug, das ein autonom fahrendes Fahrzeug (2) ist, das als ein Ausfahrtsziel in dem automatisierten Valet-Parken dient, geparkt ist, und Parkplatz-Karteninformationen einschließlich Ausfahrtspositionsinformationen des Parkplatzes, Aufmerksamkeitszielbereiche (W) festzulegen, die die Parklücken sind, die das Ausfahren des Ausfahrtsfahrzeugs beeinflussen, wenn ein anderes Fahrzeug in die Aufmerksamkeitszielbereiche (W) inmitten der Parklücken (61) um den Ausfahrtszielbereich herum einfährt oder aus diesen ausfährt;
eine Routen-Festlegevorrichtung (12), die konfiguriert ist, um eine Ausfahrtsroute für das Ausfahrtsfahrzeug zu einem Ausgang des Parkplatzes festzulegen, basierend auf der Ausfahrtszielbereich und den Parkplatz-Karteninformationen, wobei die Einrichtung zur Festlegung eines Aufmerksamkeitszielbereichs (13) konfiguriert ist, um den Aufmerksamkeitszielbereich (W) basierend auf der Ausfahrtsroute und den Parkplatz-Karteninformationen festzulegen;
eine Einrichtung zur Bestimmung eines Aufmerksamkeitsfahrzeugs (14), die konfiguriert ist, um zu bestimmen, ob Aufmerksamkeitszielfahrzeuge, die die autonom fahrenden Fahrzeuge (2) sind, die in die Aufmerksamkeitszielbereiche (W) einfahren oder aus diesen ausfahren, anwesend sind, basierend auf den Aufmerksamkeitszielbereichen (W), den Parkplatz-Karteninformationen und den Fahrzeuginformationen;
eine Fertigstellungs-Bestimmungsvorrichtung (15), die konfiguriert ist, um, wenn die Einrichtung zur Bestimmung eines Aufmerksamkeitsfahrzeugs (14) bestimmt, dass die Aufmerksamkeitszielfahrzeuge anwesend sind, zu bestimmen, ob alle Aufmerksamkeitszielfahrzeuge die Einfahrt oder Ausfahrt aus den Parklücken (61) fertiggestellt haben, basierend auf den Parkplatz-Karteninformationen und den Fahrzeuginformationen; und
eine Fahrzeuganweisungseinrichtung (16), die konfiguriert ist, um, wenn die Einrichtung zur Bestimmung eines Aufmerksamkeitsfahrzeugs (14) bestimmt, dass die Aufmerksamkeitszielfahrzeuge anwesend sind, eine Ausfahrtsanweisung an das Ausfahrtsfahrzeug zu geben, nachdem die Fertigstellungs-Bestimmungsvorrichtung (15) bestimmt, dass alle Aufmerksamkeitszielfahrzeuge die Einfahrt oder die Ausfahrt aus den Parklücken (61) fertiggestellt haben;
wobei die Fahrzeuganweisungseinrichtung (16) konfiguriert ist, um, selbst wenn es ein Nicht-Aufmerksamkeitszielfahrzeug gibt, das ein autonom fahrendes Fahrzeug ist, das in eine Parklücke außer dem Aufmerksamkeitszielbereich (W) einfährt oder aus dieser ausfährt, die Ausfahrtsanweisung an das Ausfahrtsfahrzeug zu geben, ohne zu warten, dass das Nicht-Aufmerksamkeitszielfahrzeug die Einfahrt oder die Ausfahrt aus der Parklücke fertigstellt;
wobei die Einrichtung zur Festlegung eines Aufmerksamkeitszielbereichs (13) konfiguriert ist, um eine Parklücke (61), die sich in einer Richtung entlang der Ausfahrtsroute befindet, als den Aufmerksamkeitszielbereich (W) inmitten der Parklücken (61) benachbart zu dem Ausfahrtszielbereich in Kontakt mit einem Fahrweg in dem Parkplatz (50) festzulegen, und eine Parklücke (61), die sich nicht in der Richtung entlang der Ausfahrtsroute befindet, nicht als einen Aufmerksamkeitszielbereich (W) festzulegen;
wobei die Aufmerksamkeitszielfahrzeuge ein Ausweichfahrzeug beinhalten, das ein autonom fahrendes Fahrzeug (2) ist, das temporär in einen Aufmerksamkeitszielbereich (W) ausweicht oder temporär in einen Fahrweg in dem Parkplatz (50) von dem Aufmerksamkeitszielbereich (W) ausweicht;
wobei die Aufmerksamkeitszielfahrzeuge kein Ausweichfahrzeug beinhalten, das sich auf der Ausfahrtsroute des Ausfahrtsfahrzeugs befindet und von der Ausfahrtsroute ausweicht.

2. Steuerverfahren für ein automatisiertes Valet-Parksystem (1), das konfiguriert ist, um automatisiertes Valet-Parken für automatisch parkende autonom fahrende Fahrzeuge (2) in Zielparklücken durchzuführen, die inmitten einer Vielzahl von Parklücken (61) in einem Parkplatz (50) festgelegt sind, wobei das Steuerverfahren Folgendes umfasst:
Erfassen von Fahrzeuginformationen einschließlich Positionsinformationen der autonom fahrenden Fahrzeuge (2) in dem Parkplatz (50) und Einfahrts- und Ausfahrtsinformationen der autonom fahrenden Fahrzeuge (2);
Festlegen, basierend auf einem Ausfahrtszielbereich, wo ein Ausfahrtsfahrzeug, das ein autonom fahrendes Fahrzeug (2) ist, das als ein Ausfahrtsziel in dem automatisierten Valet-Parken dient, geparkt ist, und Parkplatz-Karteninformationen einschließlich Ausfahrtspositionsinformationen des Parkplatzes (50), von Aufmerksamkeitszielparklücken (W), die die Parklücken sind, die die Ausfahrt des Ausfahrtsfahrzeugs beeinflussen, wenn ein anderes Fahrzeug in den Aufmerksamkeitszielbereich (W) inmitten der Parklücken (61) um den Ausfahrtszielbereich herum einfährt oder aus diesen ausfährt;
Festlegen einer Ausfahrtsroute für das Ausfahrtsfahrzeug zu einem Ausgang des Parkplatzes, basierend auf dem Ausfahrtszielbereich und den Parkplatz-Karteninformationen, wobei der Aufmerksamkeitszielbereich (W) festgelegt sind basierend auf der Ausfahrtsroute und den Parkplatz-Karteninformationen;
Bestimmen, ob Aufmerksamkeitszielfahrzeuge, die die autonom fahrenden Fahrzeuge (2) sind, die in den Aufmerksamkeitszielbereich (W) einfahren oder aus diesen ausfahren, anwesend sind, basierend auf den Aufmerksamkeitszielbereichen (W), den Parkplatz-Karteninformationen und den Fahrzeuginformationen;
wenn die Bestimmung gemacht wird, dass die Aufmerksamkeitszielfahrzeuge anwesend sind, Bestimmen, ob alle Aufmerksamkeitszielfahrzeuge die Einfahrt oder die Ausfahrt aus den Parklücken (61) fertiggestellt haben, basierend auf den Parkplatz-Karteninformationen und den Fahrzeuginformationen; und
wenn die Bestimmung gemacht wird, dass die Aufmerksamkeitszielfahrzeuge anwesend sind, Geben einer Ausfahrtsanweisung an das Ausfahrtsfahrzeug, nachdem die Bestimmung gemacht wurde, dass alle Aufmerksamkeitszielfahrzeuge die Einfahrt oder die Ausfahrt aus den Parklücken (61) fertiggestellt haben;
wobei, selbst wenn es ein Nicht-Aufmerksamkeitszielfahrzeug gibt, das ein autonom fahrendes Fahrzeug ist, das in eine Parklücke außer dem Aufmerksamkeitszielbereich (W) einfährt oder aus dieser ausfährt, die Ausfahrtsanweisung an das Ausfahrtsfahrzeug gegeben wird, ohne zu warten, dass das Nicht-Aufmerksamkeitszielfahrzeug die Einfahrt oder die Ausfahrt aus der Parklücke fertigstellt;
wobei das Festlegen des Aufmerksamkeitszielbereichs (W) das Festlegen einer Parklücke (61), die sich in einer Richtung entlang der Ausfahrtsroute befindet, als den Aufmerksamkeitszielbereich (W) inmitten der Parklücken (61) benachbart zu dem Ausfahrtszielbereich in Kontakt mit einem Fahrweg in dem Parkplatz (50), und das Nicht-Festlegen einer Parklücke (61), die sich nicht in der Richtung entlang der Ausfahrtsroute befindet, als einen Aufmerksamkeitszielbereich (W) umfasst;
wobei die Aufmerksamkeitszielfahrzeuge ein Ausweichfahrzeug beinhalten, das ein autonom fahrendes Fahrzeug (2) ist, das temporär in einen Aufmerksamkeitszielbereich (W) ausweicht oder temporär in einen Fahrweg in dem Parkplatz (50) von dem Aufmerksamkeitszielbereich (W) ausweicht;
wobei die Aufmerksamkeitszielfahrzeuge kein Ausweichfahrzeug beinhalten, das sich auf der Ausfahrtsroute des Ausfahrtsfahrzeugs befindet und von der Ausfahrtsroute ausweicht.

3. Nichttransitorisches Speichermedium (10b), das Anweisungen speichert, die durch einen Server (10) einschließlich eines oder mehrerer Prozessoren (10a) ausgeführt werden können und die verursachen, dass der Server (10) automatisiertes Valet-Parken für automatisch parkende autonom fahrende Fahrzeuge (2) in Zielparklücken durchführt, die inmitten einer Vielzahl von Parklücken (61) in einem Parkplatz (50) festgelegt sind, wobei die Anweisungen verursachen, dass der Server (10) einschließlich des einen oder der mehreren Prozessoren (10a) Funktionen durchführt, umfassend:
Erfassen von Fahrzeuginformationen einschließlich Positionsinformationen der autonom fahrenden Fahrzeuge (2) in dem Parkplatz (50) und Einfahrts- und Ausfahrtsinformationen der autonom fahrenden Fahrzeuge (2);
Festlegen, basierend auf einem Ausfahrtszielbereich, wo ein Ausfahrtsfahrzeug, das ein autonom fahrendes Fahrzeug (2) ist, das als ein Ausfahrtsziel in dem Parkplatz (50) dient, geparkt ist, und Parkplatz-Karteninformationen einschließlich Ausfahrtspositionsinformationen des Parkplatzes (50), von Aufmerksamkeitszielbereichen (W), die die Parklücken sind, die die Ausfahrt des Ausfahrtsfahrzeugs beeinflussen, wenn ein anderes Fahrzeug in die Aufmerksamkeitszielbereiche (W) inmitten der Parklücken (61) um den Ausfahrtszielbereich herum einfährt oder aus diesen ausfährt;
Festlegen einer Ausfahrtsroute für das Ausfahrtsfahrzeug zu einem Ausgang des Parkplatzes, basierend auf dem Ausfahrtszielbereich und den Parkplatz-Karteninformationen, wobei die Aufmerksamkeitszielbereiche (W) festgelegt sind basierend auf der Ausfahrtsroute und den Parkplatz-Karteninformationen;
Bestimmen, ob Aufmerksamkeitszielfahrzeuge, die die autonom fahrenden Fahrzeuge (2) sind, die in die Aufmerksamkeitszielbereiche (W) einfahren oder aus diesen ausfahren, anwesend sind, basierend auf den Parkplatz-Karteninformationen und den Fahrzeuginformationen;
wenn die Bestimmung gemacht wird, dass die Aufmerksamkeitszielfahrzeuge anwesend sind, Bestimmen, ob alle Aufmerksamkeitszielfahrzeuge die Einfahrt oder die Ausfahrt aus den Parklücken (61) fertiggestellt haben, basierend auf den Parkplatz-Karteninformationen und den Fahrzeuginformationen; und
wenn die Bestimmung gemacht wird, dass die Aufmerksamkeitszielfahrzeuge anwesend sind, Geben einer Ausfahrtstartanweisung an das Ausfahrtsfahrzeug, nachdem die Bestimmung gemacht wurde, dass alle Aufmerksamkeitszielfahrzeuge die Einfahrt oder die Ausfahrt aus den Parklücken (61) fertiggestellt haben;
wobei, selbst wenn es ein Nicht-Aufmerksamkeitszielfahrzeug gibt, das ein autonom fahrendes Fahrzeug ist, das in eine Parklücke außer dem Aufmerksamkeitszielbereich (W) einfährt oder aus dieser ausfährt, die Ausfahrtsstartanweisung an das Ausfahrtsfahrzeug gegeben wird, ohne zu warten, dass das Nicht-Aufmerksamkeitszielfahrzeug die Einfahrt oder die Ausfahrt aus der Parklücke fertigstellt;
wobei das Festlegen des Aufmerksamkeitszielbereichs (W) das Festlegen einer Parklücke (61), die sich in einer Richtung entlang der Ausfahrtsroute befindet, als den Aufmerksamkeitszielbereich (W) inmitten der Parklücken (61) benachbart zu dem Ausfahrtszielbereich in Kontakt mit einem Fahrweg in dem Parkplatz (50), und das Nicht-Festlegen einer Parklücke (61), die sich nicht in der Richtung entlang der Ausfahrtsroute befindet, als einen Aufmerksamkeitszielbereich (W) umfasst;
wobei die Aufmerksamkeitszielfahrzeuge ein Ausweichfahrzeug beinhalten, das ein autonom fahrendes Fahrzeug (2) ist, das temporär in einen Aufmerksamkeitszielbereich (W) ausweicht oder temporär in einen Fahrweg in dem Parkplatz (50) von dem Aufmerksamkeitszielbereich (W) ausweicht;
wobei die Aufmerksamkeitszielfahrzeuge kein Ausweichfahrzeug beinhalten, das sich auf der Ausfahrtsroute des Ausfahrtsfahrzeugs befindet und von der Ausfahrtsroute ausweicht.

## Revendications

1. Système de stationnement voiturier automatisé (1) configuré pour réaliser un stationnement voiturier automatisé pour effectuer le stationnement automatique de véhicules à conduite autonome (2) dans des espaces de stationnement cibles réglés parmi une pluralité d'espaces de stationnement (61) dans un endroit de stationnement (50), le système de stationnement voiturier automatisé (1) comprenant :
une unité d'acquisition d'informations de véhicule (11) configurée pour acquérir des informations de véhicule incluant des informations de position des véhicules à conduite autonome (2) dans l'endroit de stationnement (50) et des informations d'entrée et de sortie des véhicules à conduite autonome (2) ;
une unité de réglage d'espace cible d'attention (13) configurée pour régler, sur la base d'un espace cible de sortie où un véhicule de sortie, qui est un véhicule à conduite autonome (2) servant de cible de sortie dans le stationnement voiturier automatisé, est en stationnement, et d'informations cartographiques d'endroit de stationnement incluant des informations de position de sortie de l'endroit de stationnement, des espaces cibles d'attention (W) qui sont les espaces de stationnement qui affectent la sortie du véhicule de sortie lorsque tout autre véhicule est en train d'entrer dans ou de sortir depuis les espaces cibles d'attention (W) parmi les espaces de stationnement (61) autour de l'espace cible de sortie ;
une unité de réglage d'itinéraire (12) configurée pour régler un itinéraire de sortie pour le véhicule de sortie vers une sortie de l'endroit de stationnement, sur la base de l'espace cible de sortie et des informations cartographiques d'endroit de stationnement, dans lequel l'unité de réglage d'espace cible d'attention (13) est configurée pour régler les espaces cibles d'attention (W), sur la base de l'itinéraire de sortie et des informations cartographiques d'endroit de stationnement ;
une unité de détermination de véhicule cible d'attention (14) configurée pour déterminer si des véhicules cibles d'attention, qui sont les véhicules à conduite autonome (2) en train d'entrer dans ou de sortir depuis les espaces cibles d'attention (W), sont présents, sur la base des espaces cibles d'attention (W), des informations cartographiques d'endroit de stationnement, et des informations de véhicule ;
une unité de détermination d'achèvement (15) configurée pour, lorsque l'unité de détermination de véhicule cible d'attention (14) détermine que les véhicules cibles d'attention sont présents, déterminer si tous les véhicules cibles d'attention ont achevé une entrée dans ou une sortie depuis les espaces de stationnement (61), sur la base des informations cartographiques d'endroit de stationnement et des informations de véhicule ; et
une unité d'instruction de véhicule (16) configurée pour, lorsque l'unité de détermination de véhicule cible d'attention (14) détermine que les véhicules cibles d'attention sont présents, donner une instruction de commencement de sortie au véhicule de sortie après que l'unité de détermination d'achèvement (15) détermine que tous les véhicules cibles d'attention ont achevé l'entrée dans ou la sortie depuis les espaces de stationnement (61) ;
dans lequel l'unité d'instruction de véhicule (16) est configurée pour, même lorsqu'il y a un véhicule cible de non-attention, qui est un véhicule à conduite autonome en train d'entrer dans ou de sortir depuis un espace de stationnement autre que l'espace cible d'attention (W), donner l'instruction de commencement de sortie au véhicule de sortie sans attendre que le véhicule cible de non-attention n'achève l'entrée dans ou la sortie depuis l'espace de stationnement ;
l'unité de réglage d'espace cible d'attention (13) est configurée pour régler un espace de stationnement (61) situé dans une direction le long de l'itinéraire de sortie en tant qu'espace cible d'attention (W) parmi les espaces de stationnement (61) adjacents à l'espace cible de sortie en contact avec un trajet de déplacement dans l'endroit de stationnement (50), et pour ne pas régler un espace de stationnement (61) qui n'est pas situé dans la direction le long de l'itinéraire de sortie en tant qu'espace cible d'attention (W) ;
les véhicules cibles d'attention incluent un véhicule d'écartement, qui est un véhicule à conduite autonome (2) s'écartant temporairement jusque dans un espace cible d'attention (W) ou s'écartant temporairement jusque dans un trajet de déplacement dans l'endroit de stationnement (50) depuis l'espace cible d'attention (W) ;
les véhicules cibles d'attention n'incluent pas de véhicule d'écartement qui est situé sur l'itinéraire de sortie du véhicule de sortie et s'écarte depuis l'itinéraire de sortie.

2. Procédé de commande pour un système de stationnement voiturier automatisé (1) configuré pour réaliser un stationnement voiturier automatisé pour effectuer le stationnement automatique de véhicules à conduite autonome (2) dans des espaces de stationnement cibles réglés parmi une pluralité d'espaces de stationnement (61) dans un endroit de stationnement (50), le procédé de commande comprenant les faits suivants :
acquérir des informations de véhicule incluant des informations de position des véhicules à conduite autonome (2) dans l'endroit de stationnement (50) et des informations d'entrée et de sortie des véhicules à conduite autonome (2) ;
régler, sur la base d'un espace cible de sortie où un véhicule de sortie, qui est un véhicule à conduite autonome (2) servant de cible de sortie dans le stationnement voiturier automatisé est en stationnement, et d'informations cartographiques d'endroit de stationnement incluant des informations de position de sortie de l'endroit de stationnement (50), des espaces cibles d'attention (W) qui sont les espaces de stationnement qui affectent la sortie du véhicule de sortie lorsque tout autre véhicule est en train d'entrer dans ou de sortir depuis les espaces cibles d'attention (W) parmi les espaces de stationnement (61) autour de l'espace cible de sortie ;
régler un itinéraire de sortie pour le véhicule de sortie vers une sortie de l'endroit de stationnement, sur la base de l'espace cible de sortie et des informations cartographiques d'endroit de stationnement, dans lequel les espaces cibles d'attention (W) sont réglés sur la base de l'itinéraire de sortie et des informations cartographiques d'endroit de stationnement ;
déterminer si des véhicules cibles d'attention, qui sont les véhicules à conduite autonome (2) en train d'entrer dans ou de sortir depuis les espaces cibles d'attention (W), sont présents, sur la base des espaces cibles d'attention (W), des informations cartographiques d'endroit de stationnement, et des informations de véhicule ;
lorsqu'il est effectué une détermination que les véhicules cibles d'attention sont présents, déterminer si tous les véhicules cibles d'attention ont achevé une entrée dans ou une sortie depuis les espaces de stationnement (61), sur la base des informations cartographiques d'endroit de stationnement et des informations de véhicule ; et
lorsqu'il est effectué une détermination que les véhicules cibles d'attention sont présents, donner une instruction de commencement de sortie au véhicule de sortie après qu'il est effectué une détermination que tous les véhicules cibles d'attention ont achevé l'entrée dans ou la sortie depuis les espaces de stationnement (61) ;
dans lequel, même lorsqu'il y a un véhicule cible de non-attention, qui est un véhicule à conduite autonome en train d'entrer dans ou de sortir depuis un espace de stationnement autre que l'espace cible d'attention (W), l'instruction de commencement de sortie est donnée au véhicule de sortie sans attendre que le véhicule cible de non-attention n'achève l'entrée dans ou la sortie depuis l'espace de stationnement ;
le fait de régler les espaces cibles d'attention (W) comprend les faits de régler un espace de stationnement (61) situé dans une direction le long de l'itinéraire de sortie en tant qu'espace cible d'attention (W) parmi les espaces de stationnement (61) adjacents à l'espace cible de sortie en contact avec un trajet de déplacement dans l'endroit de stationnement (50), et de ne pas régler un espace de stationnement (61) qui n'est pas situé dans la direction le long de l'itinéraire de sortie en tant qu'espace cible d'attention (W) ;
les véhicules cibles d'attention incluent un véhicule d'écartement, qui est un véhicule à conduite autonome (2) s'écartant temporairement jusque dans un espace cible d'attention (W) ou s'écartant temporairement jusque dans un trajet de déplacement dans l'endroit de stationnement (50) depuis l'espace cible d'attention (W) ;
les véhicules cibles d'attention n'incluent pas de véhicule d'écartement qui est situé sur l'itinéraire de sortie du véhicule de sortie et s'écarte depuis l'itinéraire de sortie.

3. Support de stockage non transitoire (10b) stockant des instructions qui sont exécutables par un serveur (10) incluant un ou plusieurs processeurs (10a) et qui amènent le serveur (10) à réaliser un stationnement voiturier automatisé pour effectuer le stationnement automatique de véhicules à conduite autonome (2) dans des espaces de stationnement cibles réglés parmi une pluralité d'espaces de stationnement (61) dans un endroit de stationnement (50), les instructions amenant le serveur (10) incluant l'un ou les plusieurs processeurs (10a) à réaliser des fonctions comprenant :
acquérir des informations de véhicule incluant des informations de position des véhicules à conduite autonome (2) dans l'endroit de stationnement (50) et des informations d'entrée et de sortie des véhicules à conduite autonome (2) ;
régler, sur la base d'un espace cible de sortie où un véhicule de sortie, qui est un véhicule à conduite autonome (2) servant de cible de sortie dans l'endroit de stationnement (50), est en stationnement, et d'informations cartographiques d'endroit de stationnement incluant des informations de position de sortie de l'endroit de stationnement (50), des espaces cibles d'attention (W) qui sont les espaces de stationnement qui affectent la sortie du véhicule de sortie lorsque tout autre véhicule est en train d'entrer dans ou de sortir depuis les espaces cibles d'attention (W) parmi les espaces de stationnement (61) autour de l'espace cible de sortie ;
régler un itinéraire de sortie pour le véhicule de sortie vers une sortie de l'endroit de stationnement, sur la base de l'espace cible de sortie et des informations cartographiques d'endroit de stationnement, dans lequel les espaces cibles d'attention (W) sont réglés sur la base de l'itinéraire de sortie et des informations cartographiques d'endroit de stationnement ;
déterminer si des véhicules cibles d'attention, qui sont les véhicules à conduite autonome (2) en train d'entrer dans ou de sortir depuis les espaces cibles d'attention (W), sont présents, sur la base des informations cartographiques d'endroit de stationnement et des informations de véhicule ;
lorsqu'il est effectué une détermination que les véhicules cibles d'attention sont présents, déterminer si tous les véhicules cibles d'attention ont achevé une entrée dans ou une sortie depuis les espaces de stationnement (61), sur la base des informations cartographiques d'endroit de stationnement et des informations de véhicule ; et
lorsqu'il est effectué une détermination que les véhicules cibles d'attention sont présents, donner une instruction de commencement de sortie au véhicule de sortie après qu'il est effectué une détermination que tous les véhicules cibles d'attention ont achevé l'entrée dans ou la sortie depuis les espaces de stationnement (61) ;
dans lequel, même lorsqu'il y a un véhicule cible de non-attention, qui est un véhicule à conduite autonome en train d'entrer dans ou de sortir depuis un espace de stationnement autre que l'espace cible d'attention (W), l'instruction de commencement de sortie est donnée au véhicule de sortie sans attendre que le véhicule cible de non-attention n'achève l'entrée dans ou la sortie depuis l'espace de stationnement ;
la fonction consistant à régler les espaces cibles d'attention (W) comprend les fonctions consistant à régler un espace de stationnement (61) situé dans une direction le long de l'itinéraire de sortie en tant qu'espace cible d'attention (W) parmi les espaces de stationnement (61) adjacents à l'espace cible de sortie en contact avec un trajet de déplacement dans l'endroit de stationnement (50), et à ne pas régler un espace de stationnement (61) qui n'est pas situé dans la direction le long de l'itinéraire de sortie en tant qu'espace cible d'attention (W) ;
les véhicules cibles d'attention incluent un véhicule d'écartement, qui est un véhicule à conduite autonome (2) s'écartant temporairement jusque dans un espace cible d'attention (W) ou s'écartant temporairement jusque dans un trajet de déplacement dans l'endroit de stationnement (50) depuis l'espace cible d'attention (W) ;
les véhicules cibles d'attention n'incluent pas de véhicule d'écartement qui est situé sur l'itinéraire de sortie du véhicule de sortie et s'écarte depuis l'itinéraire de sortie.
